Europäisches Patentamt

(19) European Patent Office

Office européen des brevets

(11) **EP 1 270 606 A1**

(12) **EUROPEAN PATENT APPLICATION**
published in accordance with Art. 158(3) EPC

(43) Date of publication:
02.01.2003 Bulletin 2003/01

(51) Int Cl.[7]: **C08F 8/04**, C08F 12/00,
G11B 7/24

(21) Application number: 00985955.4

(22) Date of filing: 27.12.2000

(86) International application number:
PCT/JP00/09329

(87) International publication number:
WO 01/048031 (05.07.2001 Gazette 2001/27)

(84) Designated Contracting States:
AT BE CH CY DE DK ES FI FR GB GR IE IT LI LU MC NL PT SE TR
Designated Extension States:
AL LT LV MK RO SI

(30) Priority: 27.12.1999 JP 36944899
10.03.2000 JP 2000066256
07.07.2000 JP 2000206452

(71) Applicants:
• TEIJIN LIMITED
Osaka-shi Osaka 541-0054 (JP)
• BAYER AG
51368 Leverkusen (DE)

(72) Inventors:
• KIDO, Nobuaki, Teijin Limited
Iwakuni-shi, Yamaguchi 740-0014 (JP)

• MATSUMURA, Shunichi, Teijin Limited
Iwakuni-shi, Yamaguchi 740-0014 (JP)
• IWATA, Kaoru, Teijin Limited
Iwakuni-shi, Yamaguchi 740-0014 (JP)
• NITTA, Hideaki, Teijin Limited
Iwakuni-shi, Yamaguchi 740-0014 (JP)
• TAKEUCHI, Masaki, Teijin Limited
Iwakuni-shi, Yamaguchi 740-0014 (JP)
• HASHIDZUME, Kiyonari, Teijin Limited
Iwakuni-shi, Yamaguchi 740-0014 (JP)

(74) Representative: Hallybone, Huw George et al
Carpmaels and Ransford,
43 Bloomsbury Square
London WC1A 2RA (GB)

(54) **HYDROGENATED STYRENE POLYMER AND OPTICAL-DISK SUBSTRATE**

(57)     An optical disk substrate having excellent replication and releasability at the time of molding, little warpage and high strength. The optical disk substrate is made from a hydrogenated styrene polymer having a nuclearly hydrogenated styrene polymer unit content of 80 wt% or more and a reduced viscosity (in toluene, 0.5 dl/g, 30°C) of 0.3 to 0.6 dl/g and has a shrinkage factor of 4.5 % or less in a radial direction at the glass transition temperature of the above hydrogenated styrene polymer. The hydrogenated styrene polymer comprises 80 wt% or more of a nuclearly hydrogenated styrene polymer unit suitable for the production of this optical disk substrate and has a glass transition temperature of 130° C or more and a relaxation spectrum at 200° C which satisfies the following expression (1):

$$\log(H(\tau)\cdot\tau) \leq 6.5 (10^{-2} \leq \tau \leq 10^{4}) \qquad (1)$$

wherein log is a common logarithm, $\tau$ is a relaxation time (sec) and $H(\tau)$(Pa) is a relaxation spectrum at 200°C.

Fig. 1

**Description**

Field of the Invention

The present invention relates to a hydrogenated styrene polymer and to an optical disk substrate made therefrom. More specifically, it relates to a hydrogenated styrene polymer which can give an optical disk substrate free from a warp when in molding and having good mechanical properties when in use and to an optical disk substrate made therefrom.

Prior Art

Laser optical recording enables high-density information recording, storage and reproduction. Particularly, large-capacity digital versatile optical disks (DVDs) have recently been implemented as substitutes for conventional CDs and optical disks for various application purposes have been developed. Along with an increase in information recording density, thinner disk substrates through which laser light transmits are needed and disks having higher flatness are required for reading and writing information accurately.

Polycarbonate resins and polymethyl methacrylate resins have been used as materials for the above optical disks because they have excellent optical properties. Out of these, polycarbonate resins are widely used as disk materials because they have excellent transparency, thermal resistant stability and toughness.

However, the polycarbonate resins have such a problem that they have large intrinsic birefringence because they have an aromatic ring in the molecule, thereby readily causing optical an isotropy in their moldings. Meanwhile, the polymethyl methacrylate resins have poor dimensional stability due to an extremely high water absorption coefficient and low heat resistance. Although the current optical disk substrates are mainly made from a polycarbonate, along with an increase in the capacity of an optomagnetic recording disk (MOD) and growing recording density typified by the development of DVDs and the development of a blue laser, the birefringence of the polycarbonate and the warpage of a disk by moisture absorption are now apprehended.

As one of the materials which solve the above problems, there is proposed a hydrogenated polystyrene polymer.

JP-A 63-43910 (the term "JP-A" as used herein means an "unexamined published Japanese patent application") and US Patent No. 4911966 disclose optical disk substrates made from a amorphous thermoplastic resin which comprises 100 to 80 wt% of (A) a vinylcyclohexane-based polymer containing 80 wt% or more of a vinylcyclohexane component in the molecular chain and 0 to 20 wt% of (B) a vinyl aromatic polymer and which has a light transmission of 85 % or more, a water absorption coefficient of 0.1 wt% or less and a birefringence of 50 nm or less. This amorphous thermoplastic resin is a hydrogenerated product of a vinyl aromatic polymer which has favorable characteristic properties as an optical disk material, such as a high light transmission and a lower birefringence and a lower water absorption coefficient than a polycarbonate resin.

Further, as a resin which improves the defects of the above resin, it is known that a hydrogenerated product of a styrene-conjugated diene block polymer containing a rubber component prepared by block copolymerizing a conjugated diene with styrene is used for optical applications such as an optical disk substrate.

JP-A1-294721 discloses a material for forming an optical disk substrate, which is a polyvinylcyclohexane-based block copolymer obtained by hydrogenating the aromatic ring of a styrene-based block copolymer containing a polymer segment essentially composed of a styrene-based monomer in an amount of 60 to 99 wt%.

Further, JP-A3-115349 discloses two or three components of hydrogenated vinyl aromatic hydrocarbon polymer composition which comprises (a) 1 wt% or more and less than 100 wt% of a polymer obtained by hydrogenating 75 to 98 mol% of all the double bonds and aromatic rings of a vinyl aromatic hydrocarbon-conjugated diene block copolymer, (b) 0 to 95 wt% of a polymer obtained by hydrogenating 80 mol% or more of the aromatic rings of a vinyl aromatic hydrocarbon polymer and/or (c) 0 to 20 wt% of a saturated hydrocarbon resin having a number average molecular weight of 500 to 5,000 and a softening point of $40°C$ or more (the total of the components (b) and (c) is more than 0 wt%), and discloses an optical disk substrate made therefrom.

Meanwhile, in order to increase the recording density of an optical disk, the requirement for the replication of a stamper is becoming higher and higher like DVDs and a disk substrate itself is becoming thinner from 1.2 mm for conventional CDs to 0.6 mm for DVDs. In the injection molding of a polycarbonate, efforts are being made to reduce the melt viscosity of the resin by increasing its molding temperature or reducing its molecular weight as much as possible in order to increase the fluidity of the resin. However, ahydrogenated polystyrene-based resin has limitation on how much its molding temperature can be increased because it does not have substantially high heat resistance compared with a polycarbonate. Even when an optical disk substrate is produced from the hydrogenated polystyrene-based resin by an injection compression technique which has been used to mold optical disks, the substrate may be considerably warped and the mechanical properties of the obtained disk may deteriorate. When the molecular weight of the hydrogenerated polystyrene based resin is reduced too much, cracking readily occurs at the time of molding. As for the resin temperature at the time of molding hydrogenated polystyrene, the lower limit is preferably 270 to 280°C and the upper limit is preferably 320 to 350°C as disclosed in JP-A 1-317728 and JP-A 3-160051, for example. However, molding is actually carried out at about 300°C. In general, molding at a resin temperature of 340°C or more results in a marked reduction in molecular weight and a reduction in the toughness of the obtained molded article. Therefore, molding is difficult and a brittle molded article is obtained.

Thus, since the toughness of amolded article is improved by using a hydrogenated styrene-conjugated diene block copolymer, fluidity can be increased to a certain extent by reducing the molecular weight of the block copolymer more than that of a hydrogenerated product of polystyrene. However, what satisfies the requirement for replication and solves problems with releasability and disk warpage is yet to be obtained. The above copolymer has problems such as a poor releasability due to a reduction in thermal distortion temperature and a deterioration in transparency due to phase separation.

Further, since 0.6 mm-thick substrates are molded and assembled together to produce a high-density recording medium such as aDVD as described above, each substrate becomes thinner and thinner. Although warpage is improved to a certain extent by assembly, the molding of a disk substrate itself becomes more difficult and awarp after molding becomes more remarkable. Since a treatment such as sputtering is carried out before assembly, stability to a temperature rise at the time of the treatment is important. Therefore, it is more and more important to solve problems such as the warpage of a disk caused by a reduction in the thickness of a disk substrate and a warp at the time of a post-treatment caused by an increase in treatment temperature for precision molding. However, no reference has been made to a problem with the warpage of a disk substrate made from a hydrogenated polystyrene resin.

Although a hydrogenated vinyl aromatic hydrocarbon polymer, particularly hydrogenated polystyrene is thus superior in birefringence to a polycarbonate resin, it is extremely difficult to obtain from the polymer a thin disk substrate which satisfies the requirement for replication and warpage by a treatment after molding such as sputtering.

Summary of the Invention

It is an object of the present invention to provide an optical disk substrate made from a hydrogenated styrene polymer.

It is another object of the present invention to provide an optical disk substrate which allows for high-density recording and has excellent flatness.

It is still another object of the present invention to provide an optical disk substrate which has a small shrinkage factor and a small warp when it is produced by an injection compression technique.

It is a further object of the present invention to provide an optical disk substrate which has excellent replication and releasability at the time of molding, a small warp and high strength.

It is a still further object of the present invention to provide a hydrogenated styrene polymer suitable for the production of an optical disk substrate having the above properties of the present invention.

Other objects and advantages of the present invention will become obvious from the following description.

According to the present invention, firstly, the above objects and advantages of the present invention are attained by an optical disk substrate which is made from a hydrogenated styrene polymer having a nuclearly hydrogenated styrene polymer unit content of 80 wt% or more and a reduced viscosity (in toluene, 0.5 dl/g, 30°C) of 0.2 to 0.6 dl/g and which has a shrinkage factor of 4.5 % or less in a radial direction at the glass transition temperature of the hydrogenated styrene polymer.

Secondly, the above objects and advantages of the present invention are attained by a hydrogenated styrene polymer which has a nuclearly hydrogenated styrene polymer unit content of 80 wt% or more, a glass transition temperature of 130° C or more and a relaxation spectrum at 200° C which satisfies the following expression (1):

$$\log(H(\tau)\cdot\tau) \leqq 6.5(10^{-2} \leqq \tau \leqq 10^{4}) \qquad (1)$$

wherein log is a common logarithm and $\tau$ (second) and $H(\tau)$ (Pa) are a relaxation time and a relaxation spectrum at 200°C, respectively.

Brief Description of the Drawings

Fig. 1 shows relaxation spectra at 200° C of the resins of Examples 2 and 3 and Comparative Examples 4 and 5.

In the figure, the solid line indicates that the equal signs are valid in the expression (1) and the dotted line indicates that the equal signs are valid in the expression (1a).

Fig. 2 shows relaxation spectra at 200° C of the resins of Examples 4, 5 and 6. In the figure, the solid line and the dotted line mean the same as in Fig. 1.

Detailed Description of the Preferred Embodiments

A description is first given of the hydrogenated styrene polymer used in the optical disk substrate of the present invention.

The hydrogenated styrene polymer used in the optical disk of the present invention has a nuclearly hydrogenated styrene polymer content of 80 wt% or more and a reduced viscosity of 0.2 to 0.6 dl/g.

Examples of the above hydrogenated styrene polymer include hydrogenerated products of a polymer obtained from a monomer such as styrene, α-methylstyrene, 4-methylstyrene or 2-methylstyrene as a styrene. These hydrogenerated products may be used alone or in combination of two or more.

The above polymer hydrogenerated products include hydrogenerated products of the above styrene homopolymers, the above styrene copolymers and copolymers of at least one styrene and a conjugated diene.

Examples of the conjugated diene include isoprene, 1,3-butadiene, 2,3-dimethyl-1,3-butadiene, 1,3-pentadiene and 1,3-hexadiene. Out of these, isoprene and 1,3-butadiene are preferred from the viewpoints of polymerization activity and economy. They may be used alone or in combination of two or more.

As for the copolymerization ratio of the conjugated diene, the hydrogenated styrene polymer contains a polymer unit derived from a conjugated diene in an amount of preferably 20 wt% or less, more preferably 15 wt% or less, much more preferably 12 wt% or less, the most preferably 10 wt% or less. The amount of the conjugated diene copolymerized is preferably 1 wt% or more, more preferably 3 wt% or more, the most preferably 4 wt% or more to obtain a toughness improving effect by copolymerization. The conjugated diene is preferably existent in the hydrogenated styrene polymer as a polymer segment derived from a conjugated diene discriminated from a polymer segment derived from a styrene.

The lower limit of the weight average molecular weight of the polymer segment derived from the conjugated diene in the hydrogenated styrene polymer is preferably 5,500, more preferably 6,000, much more preferably 6,500, the most preferably 7,000 g/mol in terms of polystyrene standard and the upper limit thereof is preferably 20,000, more preferably 18,000, much more preferably 17,000, the most preferably 16,000 g/mol in terms of polystyrene standard. Therefore, the conjugated diene is desirably copolymerized as a hydrogenated conjugated diene polymer segment having a weight average molecular weight ranging from the above lower limit to the above upper limit, for example, 7,000 to 20,000 g/mol in terms of polystyrene standard.

When the weight average molecular weight in terms of polystyrene standard is lower than 5,500 g/mol, micro phase separation hardly occurs at the time of solidification from a molten state, which may cause deterioration in the heat resistance and toughness of a molded product and cracking. When the weight average molecular weight is higher than 20,000 g/mol, phase separation readily occurs at the time of melting, and the polymer has a long time relaxation component in the relaxation spectrum to be described hereinafter, which may cause a reduction in replication and an increase in warpage. The weight average molecular weight of the hydrogenated conjugated diene polymer segment is preferably 7,000 to 18,000 g/mol, more preferably 7,500 to 18,000 g/mol, particularly preferably 8,000 to 17,000 g/mol in terms of polystyrene standard.

The above weight average molecular weight (Mw) in terms of polystyrene standard satisfies almost the following relational expression.

$$\text{Mw (before hydrogenation)} \times 0.6 < \text{Mw (after hydrogenation)} < \text{Mw (before hydrogenation)}$$

Particularly, in the case of an almost monodisperse hydrogenated styrene polymer obtained by living anion polymerization, depending on the content and the absolute molecular weight of a comonomer component and the absolute value of the molecular weight, the weight average molecular weight satisfies the following relational expression.

$$\text{Mw (before hydrogenation)} \times 0.7 < \text{Mw (after hydrogenation)} < \text{Mw (before hydrogenation)} \times 0.9$$

As for the actual molecular weight after hydrogenation, an increase in the molecular weight corresponding to the hydrogenation reaction must be taken into consideration and it is based on the assumption that a reaction other than the hydrogenation reaction, such as the scission of the molecular chain, can be substantially ignored in the hydrogenation reaction as a matter of course.

The hydrogenated conjugated diene polymer segment is preferably amorphous. The content thereof is preferably 1 to 20 wt%. That is, the content of the hydrogenated conjugated diene polymer segment is preferably 1 wt% or more, more preferably 3 wt% o more, much more preferably 4 wt% or more because good mechanical properties such as toughness and impact resistance can be obtained. It is preferably 20 wt% or less, more preferably 15 wt% or more, much more preferably 12 wt% or less, particularly preferably 10 wt% or less because satisfactory heat resistance is retained.

In general, the block copolymerization of a styrene and a conjugated diene is carried out by living anion polymerization. By this polymerization, an almost monodisperse molecular weight distribution is obtained. Therefore, when the molecular weight and content of the hydrogenated conjugated diene polymer segment are determined, the molecular weight of the block copolymer is determined. In the present invention, a composition having a short relaxation time to be described hereinafter can be obtained by mixing two or more different hydrogenated styrene polymers or copolymers which differ in molecular weight and composition in order to provide freedom to this relationship. When the content of the hydrogenated conjugated diene polymer segment is lower than 1 wt%, the effect of modification by copolymerization is rarely obtained and a composition having improved toughness and improved replication and warpage is hardly obtained. When the content is higher than 20 wt%, the heat resistance lowers disadvantageously. The content is preferably 3 to 15 wt%, more preferably 4 to 12 wt%, much more preferably 4 to 10 wt%.

Further, the hydrogenated conjugated diene polymer segment is advantageously a hydrogenerated product of a conjugated diene polymer having a 1,4-addition conjugated diene polymer unit content of preferably 70 wt% or more, more preferably 80 to 98 wt%, much more preferably 90 to 97 wt% based on the total of the 1,4-addition conjugated diene polymer unit and a 1,2-addition conjugated diene polymer unit from the viewpoint of toughness.

The hydrogenated styrene polymer of the present invention has a polymer unit derived from a styrene, that is, a nuclearly hydrogenated styrene polymer unit content of preferably 95 mol% or more, more preferably 98 mol% or more, particularly preferably 100 mol% based on the total of the nuclearly hydrogenated styrene polymer unit and a not nuclearly hydrogenated polymer unit. In other words, the content of the not nuclearly hydrogenated styrene polymer unit is substantively 0 mol%.

To polymerize a styrene polymer before hydrogenation in the present invention, a known method may be employed. For example, in the case of a polymer consisting of a styrene only, that is, polystyrene, conventionally known radical polymerization or anion polymerization may be used to produce the polymer. In the case of a styrene-conjugated diene block copolymer, a known method such as anion polymerization using organic lithium as an initiator may be used for polymerization.

The hydrogenated styrene polymer in the present invention obtained by hydrogenating the above styrene polymer has a hydrogenation ratio of preferably 95 % or more and may be obtained by hydrogenating 95 mol% or more of the aromatic rings of the styrene polymer. When the hydrogenation ratio is lower than 95 mol%, reductions in the transparency and heat resistance of the obtained hydrogenated styrene polymer and an increase in the birefringence of amolded article thereof are seen disadvantageously. Although the hydrogenation ratio is desirably as high as possible, it is determined in consideration of the physical properties of the actually obtained hydrogenated styrene polymer and economical efficiency including the equipment and operation costs of the hydrogenation step required for attaining the above hydrogenation ratio. The hydrogenation ratio is more preferably 98 mol% or more, much more preferably 99 mol% or more, the most preferably 100 mol% substantially.

Since a double bond is generally hydrogenated more easily than an aromatic ring, when the above hydrogenation ratio of the aromatic ring is obtained, the residue of the double bond is substantially null.

The hydrogenation catalyst used for the hydrogenation of the styrene polymer is not particularly limited and a known catalyst which can hydrogenate an aromatic ring and a double bond may be used. Specific examples of the hydrogenation catalyst include solid catalysts having a precious metal such as nickel, palladium, platinum, cobalt, ruthenium or rhodium, or a compound such as an oxide, salt or complex thereof carried on a porous carrier such as carbon, alumina, silica or silica·alumina diatomaceous earth. Out of these, solid catalysts having nickel, palladium or platinum carried on alumina, silica or silica·alumina diatomaceous earth are preferred because they have high reactivity. The amount of the hydrogenation catalyst which depends on its catalytic activity is preferably 0.5 to 40 wt% based on the styrene polymer.

The hydrogenation reaction is generally carried out at a hydrogen pressure of 30 to 250 kgf/cm$^2$ (2.9 to 24.5 MPa) and a reaction temperature of 70 to 250° C. When the reaction temperature is too low, the reaction hardly proceeds and when the reaction temperature is too high, the molecular weight tends to be reduced by the scission of the molecular chain. To prevent a reduction in the molecular weight caused by the scission of the molecular chain and smoothly promote the reaction, the hydrogenation reaction is preferably carried out at a suitable temperature and hydrogen pressure which are determined by the type and amount of the used catalyst and the solution concentration and molecular weight of the styrene polymer.

A solvent which does not become a catalyst poison for the hydrogenation catalyst is preferably selected as the solvent used for the hydrogenation reaction. Preferred examples of the solvent include saturated aliphatic hydrocarbons such as cyclohexane and methyl cyclohexane which are advantageously used as a solvent for a polymerization reaction. In addition, a polar solvent such as an ether exemplified by tetrahydrofuran, dioxane and methyl-t-butyl ether, ester or alcohol may be added to the above solvent in limits that do not impede the solubility of the styrene polymer in order to improve reactivity or suppress a reduction in molecular weight caused by the scission of the molecular chain.

The hydrogenation reaction is preferably carried out when the amount of the styrene polymer used in the reaction is 3 to 50 wt%. When the amount of the polymer is smaller than 3 wt%, it is not preferred from the viewpoints of productivity and economy and when the amount is larger than 50 wt%, the viscosity of the solution becomes too high, which is not preferred from the viewpoints of handling ease and reactivity.

After the end of the hydrogenation reaction, the catalyst can be removed by a known post-treatment technique such as centrifugation or filtration. When the obtained product is used as an optical material, the content of the residual catalytic metal component in the resin must be reduced as much as possible. The total amount of the residual catalytic metals is preferably 10 ppm or less, more preferably 1 ppm or less. The hydrogenated styrene polymer of interest can be obtained from the polymer solution from which the hydrogenation catalyst has been removed by the evaporation/distillation of the solvent, stripping or re-precipitation.

In the present invention, the content of foreign matter in the hydrogenated styrene polymer is preferably low. In other words, the number of foreign substances having a particle size of 0.5 μm or more is 20,000 or less/g, more preferably 10,000 or less/g, particularly preferably 5,000 or less/g. The foreign substances include impurities contained in the raw materials, impurities included in each production step, a gel compound of the polymer and the residues of the polymerization catalyst and the hydrogenation catalyst.

When the number of foreign substances having a particle size of 0.5 μm or more is larger than 20,000/g and an optical disk substrate for high density recording is produced from a polymer containing these foreign substances, the bit error rate becomes high and the recording and reproduction characteristics of the disk deteriorate disadvantageously.

The foreign substances may be removed by filtration with a filter in each production step or by carrying out the granulating step in a clean room.

The reduced viscosity (reduced viscosity in a toluene solution having a concentration of 0.5 g/dl at 30° C, the same shall apply hereinafter) of the hydrogenated styrene polymer of the present invention is 0.2 to 0.6 dl/g from the viewpoint of toughness of a molded article. It is preferably 0.3 to 0.6 dl/g, more preferably 0.35 to 0.55 dl/g, much more preferably 0.37 to 0.52 dl/g.

The hydrogenated styrene polymer of the present invention preferably has a glass transition temperature of 130°C or more. This shows that the hydrogenated styrene polymer of the present invention preferably reflects a high glass transition temperature based on the hydrogenated styrene polymer segment. When the glass transition temperature is lower than 130° C, the heat resistance is unsatisfactory, the mold temperature range at which release from a mold is possible is narrow at the time of molding, and information will be lost in a high-temperature environment or at the time of reading and writing information using laser light.

The relaxation spectrum at 200°C of the hydrogenated styrene polymer of the present invention preferably satisfies the following expression (1):

$$\log(H(\tau)\cdot\tau) \leqq 6.5 (10^{-2} \leqq \tau \leqq 10^{4}) \tag{1}$$

wherein log is a common logarithm, and $\tau$ (s) and $H(\tau)$(Pa) are a relaxation time and a relaxation spectrum at 200°C, respectively.

When the relaxation spectrum is outside the range of the above expression (1) and such a hydrogenated styrene polymer is used as a resin material for a high density recording optical disk, it is difficult to obtain satisfactory replication at a temperature range at which release from a mold is possible. Further, even when relatively good replication is possible, the warpage becomes large.

Moreover, as the hydrogenated styrene polymer which satisfies the expression (1) needs a short time for the relaxation of orientation, the residual orientation is small after molding and a disk substrate which rarely shrinks even at the time of a heat treatment can be obtained. Even in the case of the hydrogenated styrene polymer whose relaxation spectrum exceeds the range of the above expression (1), to mold a disk under conditions within a range that the expression (1) is satisfied after molding is effective in reducing the shrinkage factor and the warpage of the disk. However, when a great reduction in the degree of polymerization is induced, the toughness of the disk itself lowers, thereby causing the cracking of the disk. Therefore, suitable conditions must be selected.

The hydrogenated polystyrene polymer having a comonomer component derived from a conjugated diene can be preferably used because it has a small change in the degree of polymerization. Further, a hindered phenol group-containing acrylate-based compound is preferably used as a thermal stabilizer in order to suppress a reduction in the degree of polymerization at the time of molding at a high temperature.

The relaxation spectrum can be obtained from the measurement result of complex elastic modulus obtained from vibration experiments and the like by a method described in, for example, "New Series of Progress in Physiology, Vol. 8 Rheology" (written by Mitsuzo Yamamoto and published by Maki Shoten, pp. 39, 2. How to Obtain Complex Elastic Modulus). The expression (1) shows that the relaxation spectrum $H(\tau)$ must fall within the range represented by the expression (1) when the relaxation time is in the range of $10^{-2} \leqq \tau \leqq 10^4$ at 200° C. As for the range of the relaxation spectrum, the product $H(\tau)\cdot\tau$ of the above expression (1) is preferably small from the viewpoints of replication and warpage. However, when the product is too small, the reduced viscosity becomes too low and a hydrogenated styrene polymer having a practical level of toughness is not obtained. The range represented by the above expression (1) is preferably a range represented by the following expression (1a), more preferably a range represented by the following expression (1b).

$$\log(H(\tau)\cdot\tau) \leqq 6.0(10^{-2} \leqq \tau \leqq 10^4) \tag{1a}$$

$$\log(H(\tau)\cdot\tau) \leqq 5.5(10^{-2} \leqq \tau \leqq 10^4) \tag{1b}$$

wherein log is a common logarithm, and $\tau$ (sec) and $H(\tau)$ are a relaxation time and a relaxation spectrum at 200°C, respectively.

In the hydrogenated styrene polymer of the present invention, to satisfy the above expression (1), (A) the control of the distribution of polymerization degree, (B) copolymerization or (C) a combination thereof is effective.

As for the control of the distribution of polymerization degree (A), a hydrogenated styrene polymer having a relatively low molecular weight and a hydrogenated styrene polymer having a relatively high molecular weight are mixed together to obtain a hydrogenated styrene polymer which satisfies the expression (1). The hydrogenated styrene polymer preferably has a reduced viscosity of 0.2 to 0.6 dl/g after mixing from the viewpoint of the toughness of the obtained molded product. The reduced viscosity is more preferably 0.3 to 0.6 dl/g, much more preferably 0.35 to 0.55 dl/g, particularly preferably 0.37 to 0.52 dl/g to satisfy the expression (1). This method is preferred because a polymer having excellent heat resistance and transparency is easily obtained as polymers having the same composition are used. To obtain a hydrogenated styrene polymer which satisfies the expression (1) and also has satisfactory toughness, optimization at an extremely narrow range is expected.

As for copolymerization (B), the molecular weight of the polymer, the type and molecular structure of a comonomer component and/or the molecular weight of a copolymerized block are controlled. Polymer materials having different characteristic properties can be obtained by controlling these factors. The condition for the copolymer usable in the present invention to satisfy the expression (1) is that the content of a comonomer component is 20 wt% or less, preferably 15 wt% or less, more preferably 12 wt% or less, particularly preferably 10 wt% or less. The thus obtained copolymer is obtained by copolymerizing a conjugated diene such as isoprene, 1,3-butadiene, 2,3-dimethyl-1,3-butadiene, 1,3-pentadiene or 1,3-hexadiene with a styrene by a known technique such as anion polymerization and hydrogenating the product. The comonomer component preferably has a block structure. In the case of random copolymerization, the glass transition temperature of the obtained resin may lower disadvantageously. Further, even when the comonomer component has a block structure, what has a block structure with a distinct boundary between the hydrogenated styrene polymer segment and hydrogenated diene polymer segment is more preferred because it has high heat resistance. Phase separation between the hydrogenated styrene polymer segment and the hydrogenated diene polymer segment occurs due to the above structure, thereby making it possible to obtain a hydrogenated styrene polymer having a glass transition temperature of 130°C or more advantageously.

The hydrogenated styrene polymer of the present invention preferably has a linear structure without a branch. As the linear structure without a branch is preferred a structure (a-b-a structure) that the hydrogenated diene polymer segment (b) is sandwiched between the hydrogenated styrene polymer segments (a) from the viewpoints of transparency and toughness. In this structure, phase separation readily occurs at a wavelength below the wavelength of light. To produce a copolymer having a linear structure, a conventionally known production process can be applied. For example, after the living anion polymerization of a styrene polymer (a), a diene polymer (b) and a styrene polymer (a) is carried out using organic lithium as an initiator in the order named, an alcohol is used to stop the reaction and a hydrogenation reaction is carried out to produce the hydrogenated styrene polymer having a linear structure.

The combination of the both (C) means a mixture (C1) of a hydrogenated styrene polymer having no conjugated diene component and a copolymer (B) or a mixture (C2) of two or more different copolymers (B). The former mixture (C1) which satisfies the above expression (1) can be obtained by selecting the molecular weight of the copolymer (B), the types and molecular structures of comonomer components of the copolymer (B), the molecular weigh of a copolymerized block of the copolymer (B), the molecular weight of the hydrogenated styrene polymer having no conjugated diene component and the mixing ratio of the hydrogenated styrene polymer to the copolymer (B). The latter mixture (C2) which satisfies the above expression (1) can be obtained by selecting the molecular weights of the copolymers, the types and molecular structures of comonomer components of the two different copolymers (B), and the mixing ratio of two different copolymers (B) which differ from each other in the molecular weight of a copolymerization block or the like. The mixture (C1) is advantageous in terms of cost and production because the hydrogenated styrene polymer is used.

The mixture (C1) is a mixture of a hydrogenated styrene polymer having a nuclearly hydrogenated styrene polymer unit content of 80 wt% or more after mixing, a glass transition temperature of 130° C or more and a hydrogenation ratio of 95 % or more and can be obtained by hydrogenating 95 mol% or more of the aromatic rings of a styrene polymer. When the hydrogenation ratio is lower than 95 mol%, reductions in the transparency and heat resistance of the obtained hydrogenated styrene polymer and an increase in the birefringence of a molded article thereof are seen disadvantageously. Although the hydrogenation ratio is desirably as high as possible as described generally above, it is determined in consideration of the physical properties of the actually obtained hydrogenated styrene polymer and economy including the equipment and operation costs of the hydrogenation step required for attaining the above hydrogenation ratio. The hydrogenation ratio is preferably 98 mol% or more, more preferably 99 mol% or more.

A hydrogenated styrene polymer mixture having a reduced viscosity of 0.2 to 0.6 dl/g is preferred from the viewpoint of toughness after molding. The reduced viscosity is preferably 0.3 to 0.6 dl/g, more preferably 0.35 to 0.55 dl/g, particularly preferably 0.37 to 0.52 dl/g.

To satisfy the above expression (1) while satisfying the above conditions, the following polymers to be mixed are combined together.

(C-1a) a mixture of 30 to 70 parts by weight of a hydrogenated styrene polymer having a reduced viscosity of 0.40 to 0.55 dl/g and a linear structure and 70 to 30 parts by weight of a hydrogenated styrene polymer having a reduced viscosity of 0.40 to 0.55 dl/g and no conjugated diene component.

(C-1b) a mixture of 10 to 50 parts by weight of a copolymer having a reduced viscosity of 0.20 to 0.50 dl/g and a linear structure and 50 to 90 parts by weight of a hydrogenated styrene polymer having a reduced viscosity of 0.45 dl/g or more and no conjugated diene component.

(C-1c) a mixture of 20 to 90 parts by weight of a copolymer having a reduced viscosity of 0.45 dl/g or more and a linear structure and 80 to 10 parts by weight of ahydrogenated styrene polymer having a reduced viscosity of 0.50 dl/g or less and no conjugated diene component.

All of the above combinations must be hydrogenated styrene polymer mixtures having a reduced viscosity of 0.2 to 0.6 dl/g after mixing as described above.

The copolymer having a linear structure is preferably used in the combinations (C-1a) and (C-1c) out of the above combinations to improve toughness by increasing the degree of polymerization.

In the combination (C2), combinations corresponding to the above combinations (C1) can be obtained. Since the hydrogenated styrene polymer of the present invention is used as an optical disk substrate, the haze value of a 2 mm-thick resin plate molded from the polymer is preferably 5 % or less from the viewpoint of actual application for the reduction of noises and errors. The haze value is preferably as small as possible to reduce noises and errors, more preferably 4 % or less, much more preferably 3 % or less.

To improve thermal stability at the time of melt molding, the hydrogenated styrene polymer of the present invention is preferably blended with a stabilizer typified by hindered phenolic compounds such as Irganox 1010 and 1076 (of Ciba-Geigy Co., Ltd.), acrylate compounds containing a hindered phenol groups such as Sumirizer GS and GM (of Sumitomo Chemical Co., Ltd.), benzofuranone stabilizers such as HP136 (of Ciba-Geigy Co., Ltd.) and phosphite compounds such as Irgafos 168 (of Ciba-Geigy Co., Ltd.). Out of these, acrylate compounds having a hindered phenol group and benzofuranone stabilizers are preferred. Additives such as a release agent exemplified by long-chain aliphatic alcohols and long-chain aliphatic esters, lubricant, plasticizer, ultraviolet light absorber, colorant and antistatic agent may be added as required.

The disk substrate of the present invention can be produced by using conventionally known optical disk molding equipment. An optical disk substrate made from the hydrogenated styrene polymer of the present invention has a shrinkage factor in the radial direction of the disk of 4.5 % or less when it is heated at the glass transition temperature of the polymer. When the shrinkage factor in the radial direction is larger than 4.5 %, not only the warpage of the molded disk substrate itself becomes large but also the deformation of the substrate in the subsequent sputtering step becomes large, thereby making it difficult to produce a satisfactory medium. Further, this causes a reduction in the stability of the medium in a high-temperature environment.

A disk substrate having a smaller shrinkage factor in the radial direction of the disk when heated at the glass transition temperature has higher flatness. For practical application, the shrinkage factor should be determined in consideration of the tolerance of warpage and productivity. The shrinkage factor after the heat treatment is preferably 4.0 % or less, more preferably 3.5 % or less. It is much more preferably 3 % or less, the most preferably 2.5 %, ideally 2 % or less.

The optical disk substrate of the present invention preferably has a thickness of 0.7 mm or less.

A production example of this disk substrate will be described hereinbelow.

It is generally difficult to produce a disk substrate having a thickness of about 0.6 mm, a large recording capacity and the above measured shrinkage factor. Although this greatly depends on the polymerization degree of a resin material used, the melting temperature at the time of molding is set to a range of (glass transition temperature of the resin + 150°C) to (glass transition temperature + 210°C), that is, preferably 300 to 360°C, particularly preferably 320 to 360° C in the case of the hydrogenated styrene polymer. When the melting temperature is lower than 300° C, not only satisfactory replication cannot be achieved due to too high melt viscosity of the resin but also it is difficult to reduce the warpage of the disk due to the great orientation of the polymer. When molding is carried out at a resin temperature of 330°C or higher, a resin containing a hindered phenol-containing acrylate compound or benzofuranone stabilizer as a thermal stabilizer is preferably used because a resin containing a hindered phenol-type stabilizer is drastically deteriorated by heat at the time of melting. Even when such a stabilizer is used, if the resin temperature is higher than 360°C, the thermal deterioration of the resin is large and a reduction in the degree of polymerization becomes marked, thereby reducing the process stability and the strength of the obtained disk substrate considerably. The melting temperature at the time of molding is preferably 330 to 350° C.

The mold temperature at the time of molding is preferably in the range of (glass transition temperature of the polymer used - 40° C) to (glass transition temperature - 10° C). When the mold temperature is lower than (glass transition temperature - 40° C), not only satisfactory replication with a high-density stamper cannot be realized but also shrinkage during processing and the warpage of the disk itself may become large. When the mold temperature is higher than (glass transition temperature - 10° C). replication itself improves but the molded product is deformed when it is taken out from the mold as the mold temperature is too close to the glass transition temperature of the polymer. After the mold temperature is selected to achieve required replication, other molding conditions such as injection speed, compression pressure and cooling time are selected according to the characteristic properties of molding equipment in order to reduce warping of the disk substrate to ensure that the shrinkage factor of the disk substrate in the radial direction of the disk should become 4.5 % or less when heated at a glass transition temperature.

The disk substrate of the present invention can be used in an optical disk for recording and/or reproducing information signals by exposure to laser light. Optical disks such as compact disks (CD), optomagnetic disks, rewritable optical disks and digital versatile disks (DVD) are now commercially available.

The disk substrate of the present invention can be used in ROM (Read Only Memory) optical disks which enable a user only to read information, such as CD, CD-ROM and DVD-ROM, RAM (Random Access Memory) disks which enable a user to record, read and write or rewrite information, such as optomagnetic disks and phase change disks, and write-once CD-R and DVD-R disks which enable a user to write information once.

Although the optical disk provided by the present invention is not limited to the following, it is, for example, (i) a read-only optical disk (ROM optical disk) which comprises one or more of the optical disk substrate of the present invention having information recording pits on one side in such a manner that the information recording pits are located inside, or (ii) a read/write optical disk (RAM optical disk) which comprises one or more of the optical disk substrate of the present invention and an information recording layer for reading information from a change in physical properties formed therebetween.

In the ROM optical disk (i), pits as deep as about 1/4 the wavelength of reading light are formed in the substrate to constitute an information signal section and a reflective layer of aluminum or gold is formed on this information signal section. In this ROM optical disk, a reflective layer covering the pits is exposed to laser light according to an information signal which is read by detecting a change in reflectance caused by light interference produced thereby.

Further, when the disk of the present invention is used as a DVD, two disk substrates having a reflective layer and a recording layer formed thereon according to application are assembled together. There are two types of DVDs: one in which an information signal section is formed on both of the two disk substrates and the other in which an information signal section is formed on one of the two disk substrates. The optical disk substrate of the present invention can be advantageously used in both types of DVDs.

When two disks substrates are used in the above ROM optical disk or RAM optical disk, they can be assembled together by a hot melt adhesive, ultraviolet curable adhesive, thermally curable adhesive or double coated adhesive sheet.

The RAM optical disk (ii) is produced by forming at least a first dielectric layer, recording layer, second dielectric layer and reflection layer on the above substrate in the order named.

Although the substrate of the RAM optical disk (ii) of the present invention is not limited to a particular size, it has a diameter of 50 to 300 mm and a thickness of 0.3 to 3.0 mm and is shaped like a doughnut having an about 15 mm-diameter center hole. In consideration of compatibility with commercially available CDs and DVDs, a substrate having a diameter of 120 mm and a thickness of 0.6 mm or 1.2 mm is preferably used.

The above dielectric layer is preferably a amorphous transparent dielectric layer having a suitable refractive index (1.8 to 2.6). A dielectric layer formed by adding an oxide such as $SiO_2$, $Al_2O_3$, $Ta_2O_5$, $TeO_2$, $GeO_2$, $SnO_2$, $In_2O_3$ or $WO_3$ or a nitride such as $Si_3N_4$ to a crystalline chalcogenated metal such as ZnS, ZnSe, ZnTe, PbS or PbTe is known as a protective layer. A dielectric layer comprising ZnS as the main ingredient and an oxide is preferred as it has excellent transparency and low thermal stress. A dielectric layer containing $SiO_2$ as an oxide is particularly preferred because it has a large amorphous effect, a low thermal conductivity and low raw material costs.

The amount of $SiO_2$ is preferably 12 to 35 mol%, particularly preferably 20 mol% based on ZnS to achieve excellent adhesion to the substrate and fulfill the function of a protective layer most effectively. When the amount is smaller than 12 mol%, the amourphous effect is small and the stress of the layer is large. When the amount is larger than 35 mol%, the refractive index becomes small, the recording sensitivity lowers and the overwrite durability for repeatition deteriorates disadvantageously. When the amount is about 20 mol%, the function of a protective layer is fulfilled most effectively in terms of optical properties, recording sensitivity and overwrite durability for repeatition.

The thickness of the first dielectric layer is about 50 to 300 nm. This dielectric layer may consist of two or more different dielectric layers to improve adhesion to the substrate.

The thickness of the second dielectric layer is about 10 to 100 nm. The second dielectric layer may consist of two or more different dielectric layers to improve adhesion to the recording layer.

The recording layer may be an amorphous vertically magnetic recording layer having a suitable Curie temperature and a relatively large Kerr rotational angle, or a recording layer made from a material which is generally known as a phase change material. That is, the optomagnetic recording layer is a layer made from an alloy of a rare earth element and a transition metal, typified by a TbFeCo layer. To use the recording layer at a wavelength of about 405 nm, a GdFeCo layer or a laminate film consisting of a GdFeCo layer and a TbFeCo layer is preferred. An artificial lattice layer made from Pt and Co under research and development may also be used. A recording layer for a phase change optical recording medium may be made from a Te, Se, Sb, In or Ge alloy which changes its state between amorphous and crystalline or between crystalline and another crystalline, specifically SbTe, GeSbTe, GeSbTeSe, TeGeSnAu, GeTe, InSe, InSb, InSbTc, InSbSe or AgSbTe. The thickness of the recording layer is about 10 to 100 nm.

As for the thickness of each layer, a thickness optically most suitable for the wavelength of laser light used for writing or reading is selected. For example, when laser light having a wavelength of 650 nm is used, the thickness of the first dielectric layer is about 95 nm, the thickness of the recording layer is about 19 nm, the thickness of the second dielectric layer is about 15 nm, and the thickness of the metal layer is about 150 nm.

To form the above dielectric layers and recording layer, for example, methods disclosed by JP-A 6-314439 and JP-A 11-39714 may be employed.

The reflective layer used in the optical recording medium of the present invention is generally a metal thin layer made from Au, Al, Ti, Ni, Cr, Cu or Ag alone or an alloy comprising the same as the main ingredient. The thickness of the reflective layer is about 20 to 300 nm.

An ultraviolet curable resin protective layer as thick as 1 to 10 $\mu$m is preferably formed on the reflective layer.

The thus formed disk substrates are suitably assembled together and the assembly is used as a disk (ii).

Examples

The following examples are provided for the purpose of further illustrating the present invention but are in no way to be taken as limiting.

Cyclohexane, methyl t-butyl ether (solvent), styrene and isoprene were purified by distillation and fully dried before use.

As for n-butyl lithium and sec-butyl lithium, 1.57 M and 1.00 M n-hexane solutions thereof were purchased from Kanto Kagaku Co., Ltd. and directly used.

An Ni/silica·alumina catalyst (amount of Ni carried: 65 wt%) was purchased from Aldrich Co., Ltd. and directly used.

The physical properties were measured in accordance with the following methods in Examples and Comparative Examples. glass transition temperature (Tg): measured using the 2920 DSC of TA Instruments Co., Ltd. at a temperature elevation rate of 20° C/min. number average molecular weight, weight average molecular weight: measured in terms of polystyrene standard by gel permeation chromatography (Shodex System-11 GPC of Showa Denko K.K.) using THF as solvent.

weight fraction of hydrogenated isoprene segment: calculated from the following equation (2):

$$F_{HI} = (F_I \times HIp/Ip)/(F_I \times HIp/Ip + F_s \times HSt/St) \tag{2}$$

$F_{HI}$: weight ratio of isoprene polymer unit after hydrogenation

$F_I$: weight ratio of isoprene polymer unit before hydrogenation

$F_s$: weight ratio of styrene polymer unit before hydrogenation

HIp: molecular weight of hydrogenated isoprene polymer unit (70)

Ip: molecular weight of isoprene polymer unit (68)

HSt: molecular weight of hydrogenated styrene polymer unit (110)

St: molecular weight of styrene polymer unit (104) weight average molecular weight in terms of polystyrene standard of hydrogenated isoprene segment: calculated from the following equation (3):

$$M_{IP} = Mw \times F_{HI}$$

$M_{IP}$: weight average molecular weight in terms of polystyrene standard of hydrogenated isoprene segment

Mw: weight average molecular weight in terms of polystyrene standard of whole copolymer

hydrogenation ratio: determined by $^1$H-NMR using the JNM-A-400 nuclear magnetic resonance absorption device of JEOL Ltd.

melt viscosity: The melt viscosity at a shear rate of $10^3$ s$^{-1}$ was measured using the Koka type flow tester of Shimadzu Corporation.

light transmission: The transmission of a 0.6 mm disk substrate at 400 nm was measured using the U-3200 spectrophotometer of Hitachi, Ltd.

Izod impact strength: Notched and unnotched impact tests were made on a molded sample using the UF impact tester of Kamishima Seisakusho Co., Ltd. to measure its Izod impact strength.

relaxation spectrum: A vibration test was made on a corn plate-fixture at 200° C, 230° C and 280° C using the Model RDA II of Rheometric Scientific Co., Ltd. A master curve based on 200° C was drawn from the obtained curve by time-temperature superposition principle. The master curve was converted into a relaxation spectrum by a method disclosed in "New Series of Progress in Physiology, Vol. 8 Rheology" (written byMitsuzo Yamamoto and published by Maki Shoten, pp.39, 2. How to Obtain Complex Elastic Modulus).

molding of test sample: molded by an injection molding machine (M50B of Meiki Co. Ltd.).

molding of disk (DVD-ROM): A 0.6 mm-thick disk substrate was formed by injection compression molding using the M35B injection molding machine of Meiki Co., Ltd., a DVD-ROM mold and a stamper (capacity: 4.7 GB).

molding of disk (land-groove structure): A 0.6 mm-thick disk substrate was formed by injection compression molding using an injection molding machine (MO40D3H (trade name) of Nissei Jushi Kogyo Co., Ltd.), a DVD mold and a stamper having a land-groove structure (capacity: 2.6 GB).

shrinkage factor of substrate: A test sample having a length of 50 mm and a width of 8 mm was cut out from the disk substrate in a radial direction, marked to measure the length of the mark, and heated at a predetermined temperature for 10 minutes to measure the length of the mark again in order to obtain the shrinkage factor.

$$\text{shrinkage factor} = (\text{length of initial mark})/(\text{length of mark after treatment}) \times 100$$

replication ratio (DVD-ROM): The height of each pit in the stamper (value measured by 2P method) and the depth of each pit in the substrate after molding were measured at a position 55 mm from the center to calculate transfer rate using AMF from the following equation.

$$\text{replication ratio} = (\text{depth of pit in substrate})/(\text{depth of pit in stamper}) \times 100$$

replication ratio (land-groove structure): The length of a land was measured from the sectional form at a position 58 mm from the center using an atomic power microscope (SFA-300 (trade name) of Seiko Instruments Inc.) to calculate replication ratio from the following equation.

$$\text{replication ratio} = (\text{length of land of substrate})/(\text{length of land of stamper}) \times 100$$

warpage of substrate: A disk substrate obtained by injection molding was sputtered and two substrates thus obtained were assembled together to measure an angular deviation ($\alpha°$) in the radial direction of the disk in accordance with JIS X6243. The maximum absolute value of angular deviation at each point of the disk is given.

Production Example 1

500 g of polystyrene as a homopolymer (Typel58K of BASF Co., Ltd. having a weight average molecular weight of 280,0000) was dissolved in a mixed solvent of 2,400 g of cyclohexane and 1,600 g of methyl t-butyl ether in a 10-liter stainless steel autoclave, and 140 g of an Ni/silica·alumina catalyst (amount of Ni carried: 65 wt%) was fed to the autoclave to carry out a hydrogenation reaction at a hydrogen pressure of 100 kg/cm$^2$ and a temperature of 180° C for 6 hours. After the inside temperature of the autoclave was returned to normal temperature and the inside of the autoclave was fully substituted by nitrogen, the solution was taken out from the autoclave and filtered with a membrane filter (Fluoropore of Sumitomo Electric Industries, Ltd.) having an opening diameter of 0.1 μm under pressure to produce an achromatic transparent solution. The Irganox HP2225FF (containing 15 % of 5,7-di-t-butyl-3-(3,4-di-methylphenyl)-3H-benzofuranon-2 -one, 42.5 % of Irgafos 168 and 42.5 % of Irganox 1010; manufactured by Ciba Geigy Co., Ltd.) was added as a stabilizer to this solution in an amount of 0.4 wt% based on the polymer, concentrated under vacuum, flushed to remove the solvent and pelletized to produce an achromatic transparent hydrogenated styrene polymer The reduced viscosity ηsp/C of the polymer was 0.50 dl/g. When the hydrogenation ratio was measured by $^1$H-NMR, it was 99 % or more. The glass transition temperature measured by DSC was 150°C.

Example 1

The injection compression molding of a DVD-ROM disk substrate was carried out using the hydrogenated polystyrene obtained in Production Example 1 at a cylinder temperature of 340°C, a mold temperature of 130° C and a cooling time of 15 seconds. An aluminum thin layer was sputtered on the obtained disk substrate. The replication ratio, angular deviation in the radial direction and shrinkage factor when heated at 150° C of the disk substrate are shown in Table 1.

Comparative Examples 1 and 2

The injection compression molding of a DVD-ROM disk substrate was carried out using the hydrogenated polystyrene obtained in Production Example 1 by setting the cylinder temperature, mold temperature and cooling time to predetermined values shown in Table 1. An aluminum thin layer was sputtered on the obtained disk substrate. The replication ratio, angular deterioration in the radial direction and shrinkage factor when heated at 150°C of the disk substrate are shown in Table 1.

Comparative Example 3

A hydrogenated polystyrene resin was produced in the same manner as in Production Example 1 except that the Irganox 1010 was added as a stabilizer in an amount of 0.4 wt% based on the polymer, and the cylinder temperature, mold temperature and cooling time were set to predetermined values shown in Table 1 to carry out injection compression molding. The obtained substrate was brittle and a disk could not be obtained.

Table 1

|  | Ex.1 | C.Ex.1 | C.Ex.2 | C.Ex.3 |
|---|---|---|---|---|
| cylinder temperature (°C) | 340 | 330 | 330 | 340 |
| mold temperature (°C) | 130 | 130 | 125 | 130 |
| cooling time (s) | 15 | 15 | 11 | 15 |
| ηsp/C after molding | 0.43 | 0.45 | 0.47 | 0.29 |
| replication ratio (%) | 88 | 85 | 81 | - |
| shrinkage factor (%) | 3.3 | 4.9 | 5.6 | - |
| angular deviation (Deg) | 1.85 | 2.8 | -3.6 | not measurable |
| Ex.: Example          C.Ex.: Comparative Example | | | | |

Example 2

After the inside of a 5-liter stainless steel autoclave was fully dried and substituted by nitrogen, 2,017 g of cyclohexane and 237 g of styrene were fed to the autoclave. Subsequently, a 1.57 M cyclohexane solution containing 5.3 mmols of n-butyl lithium was added to start polymerization. Styrene was completely reacted at 44° C by 2 hours of agitation and then 28.0 g of isoprene was added to further carry out the reaction at 48° C for 2 hours. Thereafter, 235 g of styrene was added, and 0.56 g of 2-propanol was added 2 hours after the temperature was raised to 55°C. The obtained copolymer had a number average molecular weight of 135,000 g/mol and a weight average molecular weight of 170,000 g/mol. (The molecular weight of the isoprene component was about 9,500 g/mol, the amount of the isoprene component copolymerized measured by NMR was 5.6 wt%, 94 wt% of the isoprene component consisted of a 1,4-adduct.)

This copolymer solution was transferred to a 10-liter stainless steel autoclave, 1,250 g of cyclohexane and 700 g of methyl t-butyl ether were added, and 80 g of an Ni/silica·alumina catalyst (amount of Ni carried: 65 wt%) was added to carry out a hydrogenation reaction at a hydrogen pressure of 100 kg/cm$^2$ and a temperature of 180° C for 4 hours. After the temperature was returned to normal temperature and the inside of the autoclave was fully substituted by nitrogen, the solution was taken out from the autoclave and filtered with a membrane filter (Fluoropore of Sumitomo Electric Industries, Ltd.) having an opening of 0.1 μm under pressure to produce an achromatic transparent solution.

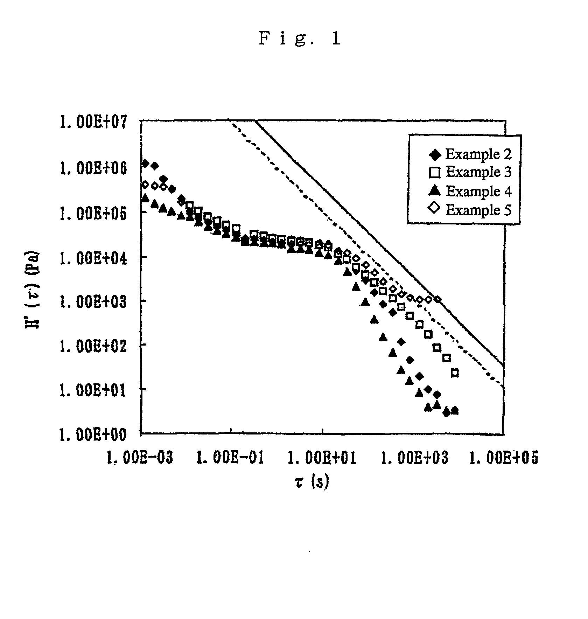

The Sumirizer GS (of Sumitomo Chemical Co., Ltd.) was added as a stabilizer to this solution in an amount of 0.5 wt% based on the polymer, concentrated under vacuum and flushed to remove the solvent in order to produce a bulk achromatic transparent hydrogenated styrene-isoprene copolymer. The reduced viscosity ηsp/C measured in a toluene solution having a concentration of 0.5 g/dl at 30° C of the polymer was 0.44 dl/g. This hydrogenated polystyrene copolymer had a number average molecular weight in terms of polystyrene standard of 102,000 g/mol and a weight average molecular weight in terms of polystyrene standard of 127,000 g/mol. The molecular weight and content calculated from the equations (2) and (3) were 7,000 g/mol and 5.5 wt%, respectively. When the hydrogenation ratio was measured by $^1$H-NMR, it was almost 100%.
The melt viscosity measured at a temperature of 300°C was 920 poise at a shear rate of $10^3$ s$^{-1}$. The glass transition temperature measured by DSC was 146°C. The relaxation spectrum of this resin is shown in Fig. 1.

An about 3 mm-thick test sample for an impact test was formed from this resin by injection molding at a cylinder temperature of 300° C and a mold temperature of 70° C. The Izod impact strength of this test sample is shown in Table 2.

Further, a DVD-RAM disk was molded from a resin obtained in the same manner as described above at a cylinder temperature of 320° C, a movable mold temperature for injection molding of 113° C and a fixed mold temperature of 118° C. The ηsp/C of the obtained disk was 0.43 dl/g. The light transmission (%) and replication ratio (%) of the disk are shown in Table 2. When the substrate was heated at 146° C for 10 minutes, its shrinkage factor in the radial direction of the disk was 1.9 %. An inorganic thin layer was formed on the obtained substrate by magnetron sputtering. A ZnS-SiO$_2$ layer as a first dielectric layer, phase-change GeSbTe layer as a recording layer, ZnS-SiO$_2$ film as a second dielectric layer and AlCr alloy layer as a reflective layer were deposited to thicknesses of 95 nm, 19 nm, 15 nm and 150 nm, respectively. After an ultraviolet curable resin layer was formed, two substrates were assembled together, α (° ) of the obtained assembled medium is shown in Table 2.

Production Example 2

500 g of polystyrene as a homopolymer (Type 158K of BASF Co., Ltd. having a weight average molecular weight of 280,000) was dissolved in a mixed solvent of 2,400 g of cyclohexane and 1,600 g of methyl t-butyl ether in a 10-liter stainless steel autoclave, and 140 g of an Ni/silica·alumina catalyst (amount of Ni carried: 65 wt%) was fed to the autoclave to carry out a hydrogenation reaction at a hydrogen pressure of 100 kg/cm$^2$ and a temperature of 180° C for 6 hours. After the temperature was returned to normal temperature and the inside of the autoclave was fully substituted by nitrogen, the solution was taken out from the autoclave and filtered with a membrane filter (Fluoropore of Sumitomo Electric Industries, Ltd.) having an opening diameter of 0.1 μm under pressure to produce an achromatic transparent solution (solution A). The hydrogenation ratio was 99 % or more.

Example 3

After the inside of a 5-liter stainless steel autoclave was fully dried and substituted by nitrogen, 2,250 g of cyclohexane and 254 g of styrene were fed to the autoclave. Subsequently, a 1.57 M cyclohexane solution containing 5.3 mmols of n-butyl lithium was added to start polymerization. Styrene was completely reacted at 42° C by 2 hours of agitation and then 87.0 g of isoprene was added to further carry out the reaction at 44° C for 2 hours. After 214 g of styrene was added to further continue the reaction at 44° C for 2 hours, 0.56 g of 2-propanol was added. The obtained copolymer had a number average molecular weight of 83,000 g/mol and a weight average molecular weight of 100,000 g/mol. (The molecular weight of the isoprene component was about 16,000 g/mol, the amount of the isoprene component copolymerized measured by NMR was 16 wt%, 94 % of the isoprene component consisted of a 1,4-adduct.)

This copolymer solution was transferred to a 10-liter stainless steel autoclave, 1,330 g of cyclohexane and 700 g of methyl t-butyl ether were added, and 80 g of an Ni/silica·alumina catalyst (amount of Ni carried: 65 wt%) was added to carry out a hydrogenation reaction at a hydrogen pressure of 100 kg/cm$^2$ and a temperature of 180° C for 2 hours. After the temperature was returned to normal temperature and the inside of the autoclave was fully substituted by nitrogen, the solution was taken out from the autoclave and filtered with a membrane filter (Fluoropore of Sumitomo Electric Industries, Ltd.) having an opening of 0.1 μm under pressure to produce an achromatic transparent solution. The reduced viscosity ηsp/C measured in a toluene solution having a concentration of 0.5 g/dl at 30°C of a hydrogenated styrene-isoprene copolymer obtained from this solution was 0.40 dl/g. This hydrogenated polystyrene copolymer had a number average molecular weight in terms of polystyrene standard of 78,000 g/mol and a weight average molecular weight of 98,000 g/mol.

After 2,070 g of the solution A obtained in Production Example 2 was mixed with 1,000 g of this solution (mixing ratio of the copolymer to the hydrogenated polystyrene = 1/2), the Sumirizer GS (of Sumitomo Chemical Co., Ltd.) was added as a stabilizer to this solution in an amount of 0.5 wt% based on the total of all the polymers, concentrated under vacuum and flushed to remove the solvent in order to produce a bulk achromatic transparent hydrogenated styrene-isoprene copolymer/hydrogenated polystyrene composition. The reduced viscosity ηsp/C measured in a toluene solution having a concentration of 0.5 g/dl at 30° C of this composition was 0.46 dl/g. The molecular weight and content calculated from the equations (2) and (3) were 14,500 g/mol and 15.6 wt%, respectively. When the hydrogenation ratio was measured by $^1$H-NMR, it was almost 100 %. The melt viscosity measured at a temperature of 300°C was 1,020 poise at a shear rate of 10$^3$ s$^{-1}$. The glass transition temperature measured by DSC was 145° C. The relaxation spectrum of this resin is shown in Fig. 1.

A test sample and a disk were molded from the obtained resin in the same manner as in Example 2 to measure their physical properties. The obtained disk had a ηsp/C of 0.45 dl/g. The molding conditions and measurement results are shown in Table 2.

Comparative Example 4

After the inside of a 3-liter stainless steel autoclave was fully dried and substituted by nitrogen, 1,027 g of cyclohexane and 123 g of styrene were fed to the autoclave. Subsequently, a 1.57 M cyclohexane solution containing 1.9 mmols of sec-butyl lithium was added to start polymerization. Styrene was completely reacted at 50° C by 2 hours of agitation and then 8.9 g of isoprene was added to further carry out the reaction at 50° C for 2 hours. After 102 g of styrene was added to further continue the reaction at 50° C for 2 hours, 0.25 g of 2-propanol was added. The obtained copolymer had a number average molecular weight of 155,000 g/mol and a weight average molecular weight of 180,000 g/mol. (The molecular weight of the isoprene component was about 6,800 g/mol, the amount of the isoprene component copolymerized measured by NMR was 3.8 wt%, 94 % of the isoprene component consisted of a 1,4-adduct.) This copolymer solution was transferred to a 10-liter stainless steel autoclave, 1,950 g of cyclohexane and 410 g of methyl t-butyl ether were added, and 39 g of an Ni/silica·alumina catalyst (amount of Ni carried: 65 wt%) was added to carry out a hydrogenation reaction at a hydrogen pressure of 100 kg/cm$^2$ and a temperature of 180° C for 4 hours. After the temperature was returned to normal temperature and the inside of the autoclave was fully substituted by nitrogen, the solution was taken out from the autoclave and filtered with a membrane filter (Fluoropore of Sumitomo Electric Industries, Ltd.) having an opening of 0.1 μm under pressure to produce an achromatic transparent solution.

The Sumirizer GS (of Sumitomo Chemical Co., Ltd.) was added as a stabilizer to this solution in an amount of 0.5 wt% based on the polymer, concentrated under vacuum and flushed to remove the solvent in order to produce a bulk achromatic transparent hydrogenated styrene-isoprene copolymer. The reduced viscosity ηsp/C measured in a toluene solution having a concentration of 0.5 g/dl at 30° C of this polymer was 0.41 dl/g. This hydrogenated polystyrene copolymer had a number average molecular weight in terms of polystyrene standard of 106,000 g/mol and a weight average molecular weight of 123,000 g/mol. The molecular weight and content calculated from the equations (2) and (3) were 4,600 g/mol and 3.7 wt%, respectively. When the hydrogenation ratio was measured by $^1$H-NMR, it was almost 100 %. The melt viscosity measured at a temperature of 300° C was 830 poise at a shear rate of 10$^3$ s$^{-1}$. The glass transition temperature measured by DSC was 142° C. The relaxation spectrum of this resin is shown in Fig. 1.

When impact test samples were to be manufactured from the obtained resin in the same manner as in Example 1, all the test samples were broken at the time of releasing from the mold. The measurement result of impact strength measured using the remaining parts is shown in Table 2. Since the test samples were brittle, the molding of a disk was not carried out.

Comparative Example 5

After the inside of a 3-liter stainless steel autoclave was fully dried and substituted by nitrogen, 1,643 g of cyclohexane and 133 g of styrene were fed to the autoclave. Subsequently, a 1.57 M cyclohexane solution of 1.6 mmols of n-butyl lithium was added to start polymerization. Styrene was completely reacted at 45°C by 2 hours of agitation and then 30.0 g of isoprene was added to further carry out the reaction at 50° C for 2 hours. Thereafter, 128 g of styrene was added, and 0.28 g of 2-propanol was added 2 hours after the temperature was raised to 52° C. The obtained copolymer had a weight average molecular weight of 210,000 g/mol. (The molecular weight of the isoprene component was about 21,000 g/mol, the amount of the isoprene component copolymerized measured by NMR was 10 wt%, 94 % of the isoprene component consisted of a 1,4-adduct.) This copolymer solution was transferred to a 10-liter stainless steel autoclave, 2,200 g of cyclohexane and 500 g of methyl t-butyl ether were added, and 45 g of an Ni/silica·alumina catalyst (amount of Ni carried: 65 wt%) was added to carry out a hydrogenation reaction at a hydrogen pressure of 100 kg/cm$^2$ and a temperature of 180° C for 4 hours. After the temperature was returned to normal temperature and the inside of the autoclave was fully substituted by nitrogen, the solution was taken out from the autoclave and filtered with a membrane filter (Fluoropore of Sumitomo Electric Industries, Ltd.) having an opening of 0.1 μm under pressure to produce an achromatic transparent solution.

The Sumirizer GS (of Sumitomo Chemical Co., Ltd.) was added as a stabilizer to this solution in an amount of 0.5 wt% based on the polymer, concentrated under vacuum and flushed to remove the solvent in order to produce a bulk achromatic transparent hydrogenated styrene-isoprene copolymer. The reduced viscosity ηsp/C measured in a toluene solution having a concentration of 0.5 g/dl at 30° C of this polymer was 0.51 dl/g. The weight average molecular weight in terms of polystyrene standard of this hydrogenated polystyrene copolymer was 173,000 g/mol. The molecular weight and content calculated from the equations (2) and (3) were 17,000 g/mol and 9.8 wt%, respectively. When the hydrogenation ratio was measured by $^1$H-NMR, it was almost 100 %. The melt viscosity measured at a temperature of 300° C was 1,030 poise at a shear rate of 10$^3$ s$^{-1}$. The glass transition temperature measured by DSC was 146° C. The relaxation spectrum of this resin is shown in Fig. 1.

The physical properties of a test sample and a disk molded from the obtained resin were measured in the same manner as in Example 1. The obtained disk had a ηsp/C of 0.49 dl/g. The molding conditions and measurement results are shown in Table 2. The molding of a disk could not be carried out stably at a temperature higher than the temperature shown in the table. The obtained substrate had a shrinkage factor in the radial direction of the disk when heated at 146° C for 10 minutes of 5.8 %. Since the warpage of the disk substrate was large, sputtering was not carried out.

As for the hydrogenated isoprene segments in the table, the equations (2) and (3) were used for calculation.

Table 2

| | | Ex.2 | Ex.3 | C.Ex.4 | C.Ex.5 |
|---|---|---|---|---|---|
| polymer | before hydrogenation<br>  Mn<br>  Mw | 135000<br>170000 | 83000<br>100000 | 155000<br>180000 | –<br>210000 |
| | after hydrogenation<br>  Mn<br>  Mw | 102000<br>127000 | 78000<br>93000 | 106000<br>123000 | –<br>173000 |
| | hydrogenated isoprene segment<br>  content (wt%)<br>  molecular weight (g/mol) | 5.5<br>7000 | 15.6<br>14500 | 3.7<br>4600 | 9.8<br>17000 |
| | $\eta$sp/C | 0.44 | 0.40 | 0.41 | 0.51 |
| blend | polymer<br>mixing ratio (wt%) | nil | P.Ex.2<br>33.3 | nil | nil |
| | $\eta$sp/C | – | 0.46 | – | – |
| molding of a<br>test sample | molding conditions (°C)<br>  cylinder temperature<br>  mold temperature | 300<br>70 | 300<br>70 | 300<br>70 | 300<br>70 |
| | impact strength (Kg·cm/cm$^2$)<br>  notched<br>  unnotched | 1.4<br>4.8 | 1.4<br>5.3 | 0.9<br>3.9 | 2.4<br>10.8 |
| molding of a<br>disk | molding conditions (°C)<br>  cylinder temperature<br>  fixed mold temperature<br>  movable mold temperature | 320<br>118<br>113 | 320<br>127<br>122 | –<br>–<br>– | 320<br>118<br>113 |
| | shrinkage factor (%)<br>  (treatment temperature, °C)<br>light transmission (%)<br>replication ratio (%)<br>$\alpha$ (°) after assembly | 1.9<br>(146)<br>89<br>90<br>0.7 | 1.7<br>(145)<br>88<br>93<br>0.6 | –<br><br>–<br>–<br>– | 5.8<br>(146)<br>88<br>50<br>– |

Ex.: Example          C.Ex.: Comparative Example          P.Ex.: Production Example

EP 1 270 606 A1

Example 4

A styrene-isoprene-styrene copolymer having a weight average molecular weight of 125,000 g/mol and an isoprene content of 10 wt% was produced by anion polymerization in the same manner as in Example 2 (molecular weight of isoprene component: 12,500 g/mol, proportion of 1,4-adduct: 94 %). The hydrogenation reaction of the obtained copolymer solution was carried out in the presence of an Ni/silica·alumina catalyst (amount of Ni carried: 65 wt%) in the same manner as in Example 2, the Sumirizer GS (of Sumitomo Chemical Co., Ltd.) was added in an amount of 0.5 wt% based on the polymer, and the resulting solution was concentrated under vacuum and flushed to remove the solvent in order to produce a bulk achromatic transparent hydrogenated styrene-isoprene-styrene terpolymer. The reduced viscosity $\eta$sp/C measured in a toluene solution having a concentration of 0.5 g/dl at 30°C of this polymer was 0.39 dl/g.

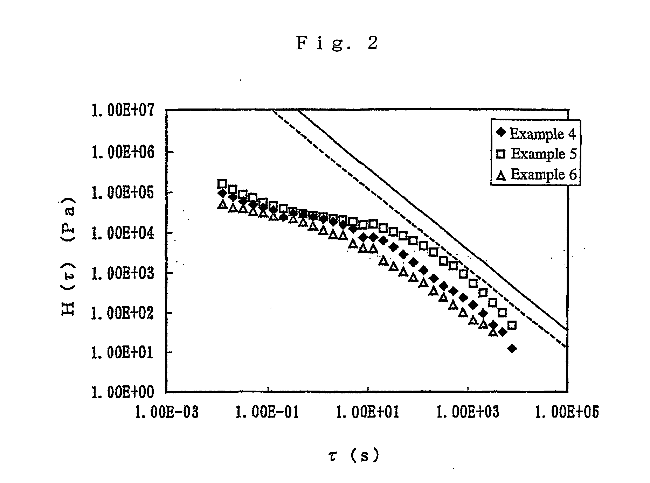

The weight average molecular weight in terms of polystyrene standard of this hydrogenated polystyrene copolymer was 106,000 g/mol. The molecular weight and content calculated from the equations (2) and (3) were 10,000 g/mol and 9.8 wt%, respectively. When the hydrogenation ratio was measured by $^1$H-NMR, it was almost 99.9 %. The melt viscosity measured at a temperature of 300° C was 780 poise at a shear rate of $10^3$ s$^{-1}$. The glass transition temperature measured by DSC was 142° C. The relaxation spectrum of this resin is shown in Fig. 2.

The physical properties of a test sample and a disk molded from the obtained resin were measured in the same manner as in Example 2. The obtained disk had a $\eta$sp/C of 0.37 dl/g. The molding conditions and measurement results are shown in Table 3.

Example 5

After the solution of the polymer hydrogenated product obtained in Example 4 and the solution of the hydrogenated product obtained in Production Example 2 were mixed together in a hydrogenated product ratio of 1:1, the Sumirizer GS (of Sumitomo Chemical Co., Ltd.) was added in an amount of 0.5 wt% based on the polymer, and the resulting solution was concentrated under vacuum and flushed to remove the solvent in order to produce a bulk achromatic transparent hydrogenated styrene-isoprene-styrene terpolymer composition. The reduced viscosity $\eta$sp/C measured in a toluene solution having a concentration of 0.5 g/dl at 30° C of this composition was 0.48 dl/g.

The melt viscosity measured at a temperature of 300° C was 1,100 poise at a shear rate of $10^3$ s$^{-1}$. The glass transition temperature measured by DSC was 146° C. The relaxation spectrum of this resin is shown in Fig. 2.

The physical properties of a test sample and a disk molded from the obtained resin were measured in the same manner as in Example 2. The obtained disk had a $\eta$sp/C of 0.43 dl/g. The molding conditions and measurement results are shown in Table 3.

As for the hydrogenated isoprene segments in the table, the equations (2) and (3) were used for caluculation.

Table 3

| | | | Ex.4 | Ex.5 |
|---|---|---|---|---|
| polymer | before hydrogenation | Mn | 96000 | 96000 |
| | | Mw | 125000 | 125000 |
| | after hydrogenation | Mn | 82000 | 82000 |
| | | Mw | 106000 | 106000 |
| | hydrogenated isoprene segment content (wt%) | | 9.8 | 9.8 |
| | molecular weight (g/mol) | | 10000 | 10000 |
| | $\eta$sp/C | | 0.39 | 0.39 |
| blend | polymer mixing ratio (wt%) | | nil | P.Ex.2 50 |
| | $\eta$sp/C | | - | 0.48 |
| molding of a test sample | molding conditions (°C) cylinder temperature | | 300 | 300 |
| | mold temperature | | 70 | 70 |
| | impact strength (Kg·cm/cm$^2$) notched | | 1.6 | 1.5 |
| | unnotched | | 6.5 | 6.3 |
| molding of a disk | molding conditions (°C) cylinder temperature | | 340 | 340 |
| | fixed mold temperature | | 110 | 125 |
| | movable mold temperature | | 105 | 120 |
| | shrinkage factor (%) (treatment temperature, °C) | | 1.4 (142) | 1.5 (146) |
| | light transmission (%) | | 88 | 88 |
| | replication | | good | good |
| | $\alpha$ (°) before assembly | | 2.0 | 2.1 |

Ex.: Example    P.Ex.: Production Example

Example 6

A styrene-isoprene-styrene copolymer having a weight average molecular weight of 470,000 g/mol and an isoprene content of 14 wt% was produced by anion polymerization in the same manner as in Example 2 (molecular weight of isoprene component: 65,800 g/mol, proportion of 1,4-adduct: 94 %). A hydrogenated product having a hydrogenation ratio of almost 100 % was obtained from the obtained copolymer solution using an Ni/silica·alumina catalyst in the same manner as in Example 2 (the obtained solution was designated as solution B). When the weight average molecular weight of the obtained hydrogenated product was measured by GPC, it was 331,000 g/mol and the molecular weight and content calculated from the equations (2) and (3) were 46,000 g/mol and 14 wt%, respectively.

Separately, a styrene-isoprene-styrene copolymer having a weight average molecular weight of 67,000 g/mol and an isoprene content of 12.5 wt% was produced by anion polymerization in the same manner as in Example 2 (molecular weight of isoprene component: 8,400 g/mol, proportion of 1,4-adduct: 94 %). A hydrogenated product having a hydrogenation ratio of almost 100 % was obtained from the obtained copolymer solution using an Ni/silica·alumina catalyst in the same manner as in Example 2 (the obtained solution was designated as solution C). When the weight average molecular weight of the obtained hydrogenated product was measured by GPC, it was 61,000 g/mol and the molecular weight and content calculated from the equations (2) and (3) were 7,300 g/mol and 12 wt%, respectively.

After the above solutions were mixed together to ensure that the mixing ratio of the hydrogenated product obtained from the solution B to the hydrogenated product obtained from the solution C should become 3:7, the Sumirizer GS (of Sumitomo Chemical Co., Ltd.) was added in an amount of 0.5 wt% based on the total of all the hydrogenated products, and the resulting solution was concentrated under vacuum and flushed to remove the solvent in order to produce a bulk achromatic transparent hydrogenated styrene-isoprene-styrene terpolymer composition. The reduced viscosity ηsp/C measured in a toluene solution having a concentration of 0.5 g/dl at 30° C of this composition was 0.45 dl/g. The glass transition temperature of this composition was 138°C.

The melt viscosity measured at a temperature of 300°C was 1,730 poise at a shear rate of $10^3$ s$^{-1}$. The glass transition temperature measured by DSC was 138°C. The relaxation spectrum of this resin is shown in Fig. 2.

The physical properties of a test sample molded from the obtained resin were measured in the same manner as in Example 2. The molding conditions and measurement results are shown in Table 4.

Table 4

| As for the hydrogenated isoprene segments in the table, the equations (2) and (3) were used for calculation. | | | |
|---|---|---|---|
| | | Ex.6B | Ex.6C |
| polymer | before hydrogenation Mn Mw | 315000 470000 | 57000 67000 |
| | after hydrogenation Mn Mw | 204000 331000 | 53000 61000 |
| | hydrogenated isoprene segment content (wt%) molecular weight (g/mol) | 14 46000 | 12 7300 |
| | ηsp/C | 0.88 | 0.29 |
| blend | polymer mixing ratio (wt%) | | Ex.6B 30 |
| | ηsp/C | | 0.45 |
| molding of a test sample | molding conditions (°C) cylinder temperature mold temperature | | 300 70 |
| | impact strength (Kg·cm/cm$^2$) notched unnotched | | 1.2 7.6 |
| Ex.: Example | | | |

**Claims**

1. An optical disk substrate which comprises ahydrogenated styrene polymer having a nuclearly hydrogenated styrene polymer unit content of 80 wt% or more and a reduced viscosity (in toluene, 0.5 g/dl, 30°C) of 0.2 to 0.6 dl/g and which has a shrinkage factor of 4.5 % or less in a radial direction at the glass transition temperature of the hydrogenated styrene polymer.

2. The optical disk substrate of claim 1, wherein said hydrogenated styrene polymer has a glass transition temperature of 130° C or more and a relaxation spectrum which satisfies the following expression (1):

$$\log(H(\tau)\cdot\tau) \leqq 6.5 (10^{-2} \leqq \tau \leqq 10^4) \tag{1}$$

wherein log is a common logarithm, $\tau$ is a relaxation time (sec) and H($\tau$)(Pa) is a relaxation spectrum at 200°C.

3. The optical disk substrate of claim 1, wherein said hydrogenated styrene polymer comprises a not nuclearly hydrogenated styrene polymer unit besides said nuclearly hydrogenated styrene polymer unit, and the content of said nuclearly hydrogenated styrene polymer unit is higher than 98 mol% based on the total of the both polymer units.

4. The optical disk substrate of claim 3, wherein the content of said not nuclearly hydrogenated styrene polymer unit is substantially 0 mol%.

5. The optical disk substrate of claim 1, wherein said hydrogenated styrene polymer comprises 1 to 20 wt% of the copolymer segment of a hydrogenated conjugated diene polymer having a weight average molecular weight of 5,500 g/mol or more.

6. The optical disk substrate of claim 5, wherein said hydrogenated conjugated diene polymer is amorphous.

7. The optical disk substrate of clam 6, wherein the segment of said hydrogenated conjugated diene polymer comprises 70 wt% or more of a hydrogenated conjugated diene polymer unit derived from a conjugated diene polymer polymerized by 1,4-addition.

8. The optical disk substrate of claim 5, wherein the copolymer segment of said hydrogenated conjugated diene polymer constituting said hydrogenated styrene polymer has a weight average molecular weight of 5,500 to 20,000 g/mol.

9. The optical disk substrate of claim 1 which has a thickness of 0.7 mm or less.

10. An read-only optical disk comprising one or more of the optical disk substrate of claim 1 having information recording pits on one side which are assembled in such a manner that the information recording pit side is located inside.

11. A read/write optical disk comprising one or more of the optical disk substrate of claim 1 and an information recording layer for reading information according to a change in its physical properties formed therebetween.

12. A hydrogenated styrene polymer having a nuclearly hydrogenated styrene polymer unit content of 80 wt% or more, a glass transition temperature of 130° C or more and a relaxation spectrum at 200° C which satisfies the following equation (1):

$$\log(H(\tau)\cdot\tau) \leqq 6.5(10^{-2} \leqq \tau \leqq 10^{4}) \tag{1}$$

wherein log is a common logarithm, and $\tau$ (sec) and H($\tau$)(Pa) are a relaxation time and a relaxation spectrum at 200° C, respectively.

13. The hydrogenated styrene polymer of claim 12 which comprises a not nuclearly hydrogenated styrene polymer unit besides said nuclearly hydrogenated styrene polymer unit, and the content of said nuclearly hydrogenated styrene polymer unit is higher than 98 mol% based on the total of the both polymer units.

14. The hydrogenated styrene polymer of claim 13, wherein the content of said not nuclearly hydrogenated styrene polymer unit is substantially 0 mol%.

15. The hydrogenated styrene polymer of claim 12 which comprises 1 to 20 wt% of the copolymer segment of a hydrogenated conjugated diene polymer having a weight average molecular weight of 5,500 g/mol or more.

16. The hydrogenated styrene polymer of claim 15, wherein said hydrogenated conjugated diene polymer is amorphous.

17. The hydrogenated styrene polymer of claim 15, wherein the segment of said hydrogenated conjugated diene polymer comprises 70 wt% or more of a hydrogenated conjugated diene polymer unit derived from a conjugated diene polymer polymerized by 1,4-addition.

18. The hydrogenated styrene polymer of claim 12, wherein the copolymer segment of said hydrogenated conjugated diene polymer constituting said hydrogenated styrene polymer has a weight average molecular weight of 5,500 to 20,000 g/mol.

Fig. 1

Fig. 2

## INTERNATIONAL SEARCH REPORT

| | International application No. |
|---|---|
| | PCT/JP00/09329 |

A. CLASSIFICATION OF SUBJECT MATTER
    Int.Cl$^7$  C08F8/04, C08F12/00, G11B7/24

According to International Patent Classification (IPC) or to both national classification and IPC

B. FIELDS SEARCHED

Minimum documentation searched (classification system followed by classification symbols)
    Int.Cl$^7$  C08F8/04, C08F12/00-12/30, G11B7/24

Documentation searched other than minimum documentation to the extent that such documents are included in the fields searched

Electronic data base consulted during the international search (name of data base and, where practicable, search terms used)
    WPI/L

C. DOCUMENTS CONSIDERED TO BE RELEVANT

| Category* | Citation of document, with indication, where appropriate, of the relevant passages | Relevant to claim No. |
|---|---|---|
| X | JP, 10-116442, A (Mitsubishi Chemical Corporation), 06 May, 1998 (06.05.98), example  (Family: none) | 1-18 |

☐ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 22 March, 2001 (22.03.01) | 03 April, 2001 (03.04.01) |

| Name and mailing address of the ISA/ | Authorized officer |
|---|---|
| Japanese Patent Office | |
| Facsimile No. | Telephone No. |

Form PCT/ISA/210 (second sheet) (July 1992)